# EUROPEAN PATENT SPECIFICATION

(11) **EP 2 678 586 B1**
(45) Date of publication and mention of the grant of the patent: **07.04.2021**
(21) Application number: 12711750.5
(22) Date of filing: 27.02.2012
(51) Int. Cl.: B62D 11/10, F16H 61/664

(54) **TRANSMISSION ARRANGEMENT**
GETRIEBEANORDNUNG
AMÉNAGEMENT DE TRANSMISSION

(30) Priority: 25.02.2011 GB 201103278
(43) Date of publication of application: 01.01.2014
(73) Proprietor: Allison Transmission, Inc., Indianapolis, IN 46222 (US)
(72) Inventor: OLIVER, Robert Andrew, Leyland Lancashire PR26 7UX (GB)
(74) Representative: HGF
(86) International application number: PCT/EP2012/000838
(87) International publication number: WO 2012/113580

(56) References cited:
- EP-A1- 0 306 272
- GB-A- 1 303 616
- US-A1- 2004 198 549

## Description

The present invention is concerned with a vehicle transmission arrangement of continuously variable type capable of driving two wheels of a vehicle independently of one another.

Embodiments of the present invention use continuously variable transmissions ("CVTs") and certain known aspects of CVTs will be explained before going on to consider the invention itself.

CVTs utilise a "variator", which is a device having a rotary variator input, a rotary variator output, and a mechanism for transmitting rotary drive between the two while enabling the ratio of input speed to output speed (the "variator ratio") to be continuously (steplessly) varied.

In a variator of the rolling traction type, some form of roller runs upon at least one race to transfer drive, the roller being movable relative to the race in order to vary the variator ratio. In the well known toroidal-races type of variator, for example, a set of rollers is sandwiched between part-toroidal faces of a pair of coaxially mounted variator races to transfer drive from one to the other. Tilting movement of the rollers changes the radii of the paths they trace upon the races and so enables change of variator ratio. Each of the rollers is subject, by the action of the races upon it, to a force along the circumferential direction about the races' axis. This force is typically reacted to the variator's casing through an actuator, the force applied by the actuator thus being referred to as the "reaction force". The rollers' mountings allow them to move a limited distance along the circumferential direction and, due to a steering effect exerted on the rollers by the races, this circumferential movement is accompanied by tilting of the rollers producing a change of variator ratio. Control over the variator is exercised by modulating the reaction force applied to the rollers by the actuator(s).

In order to control the variator ratio, one known type of variator uses a feedback loop, which is typically hydro-mechanically implemented, in which roller position is sensed and compared to a desired position, and the actuator pressure is modulated to cause the actuator to exert a force on the roller tending to reduce the difference between the two. According to this approach, roller position, and correspondingly *variator ratio*, is the control variable. An associated control system sets a desired value of variator ratio and the variator is automatically adjusted to achieve it. This mode of control is sometimes referred to as "ratio control". Another, simpler, form of ratio control is taught in WO 2007/023140 (PCT/EP2006/065467, published in the names of Torotrak (Development) Ltd and MTD Holdings Inc) which discloses a zero-turn vehicle whose variators are ratio controlled by a simple lever mechanism.

An alternative approach is to control the reaction force and to permit the rollers to assume whatever position results from it. It is straightforward to demonstrate that the reaction force exerted along the circumferential direction by the actuator (or actuators, since there may be several of them) is proportional to the reaction torque, defined as the sum of the torques acting at the variator input and the variator output. Hence in this type of variator, *reaction torque* is the control variable. A transmission of this type is referred to as "torque controlled". It is reaction torque that is set by the associated controller, and variator ratio is able to change without intervention from the controller. Note that the ratio of variator input torque to variator output torque is determined by the current variator ratio, so, for a given ratio, setting the reaction torque determines the input and the output torque of the variator, and hence of the transmission. Changes of input and output speed result from the application of these torques, added to externally applied torques, to the inertias coupled to the transmission's input and output. The variator ratio changes automatically to accommodate changes of input and output speed.

A variator on its own typically provides a limited range of input/output ratios. A complete transmission often incorporates additional gearing through which the variator is coupled between the input and output of the transmission, such gearing incorporating one or more clutches for selectively engaging different transmission "regimes". In each regime the ratio range of the variator maps onto a different range of ratios of the transmission as a whole. The term "clutch" as used herein refers to any device which can selectively make and break a mechanical coupling to engage/disengage a transmission regime. In some cases this is done by means of a conventional clutch which engages/disengages a connection between two rotating parts. In other cases it may for example be achieved using a brake to selectively permit or prevent rotation of a certain part of the gearing.

In order to provide a smooth transition from one regime to the next, the gearing is typically designed such that at a particular variator ratio (the "synchronous ratio"), a regime change produces no change in the transmission ratio.

Another desirable feature of a continuously variable transmission is the ability to provide "geared neutral", a condition in which the transmission output is static despite being mechanically coupled to the rotating transmission input. In effect, the transmission at geared neutral provides an infinite speed reduction. A known way to achieve this involves the use of an epicyclic gear, e.g. of the well known type having sun and ring gears meshing with a set of planet gears mounted on a carrier. The sun, ring and carrier form three input/outputs of the epicyclic gear which are connected in some permutation to: (i) the rotary variator input, (ii) the rotary variator output, and (iii) the transmission output. The variator is also arranged to be driven from the transmission input. At a specific variator ratio (the "geared neutral ratio"), the speeds of the epicyclic element connected to the variator input and that of the epicyclic element connected to the output cancel each other out, leaving the epicyclic element connected to the transmission output stationary. Geared neutral is only available in one regime. It makes it possible to dispense with the clutch or torque convertor used, in a more conventional vehicle transmission, to decouple the engine from the wheels as the vehicle is brought to a halt.

In place of epicyclic *gearing* as such, it is possible to use a frictional epicyclic in which the planets are formed as balls running on smooth raceways. U.S. 3494224 (Fellows et al) discloses a transmission of this type.

Turning now to consider the invention itself, when a motor vehicle executes a turn the wheels on the inside of the turn move more slowly than the wheels on the outside of the turn. The differential gear unit of a conventional motor vehicle transmission serves to transmit drive to wheels on both sides of the vehicle while accommodating the difference in their speeds. A conventional differential gear unit exerts an equal torque on both of the drive vehicle wheels and gives no scope for control of the distribution of torque between the driven wheels or for control of their relative speeds.

There are several reasons why it may be desirable to provide for such control. For an example refer to WO 2008/087450 (PCT/GB2008/050030, Infinitrak LLC) which discloses a vehicle - in particular a ride-on lawnmower - which is highly manoeuvrable and even capable of turning on the spot by virtue of the fact that its transmission provides for independent control of the speeds of the driven wheels. This is achieved by providing two continuously variable transmissions, both driven from the vehicle's engine and each driving a respective vehicle wheel. The ratios of the two transmissions are independently variable and are directly set using a simple lever mechanism, and in this way the driver steers the vehicle - if the driven wheel on the right hand side of the vehicle turns faster than the driven wheel on the left hand side then the vehicle will turn to the left. If the driven wheels turn in opposite directions then a very tight turn can be executed, and in the extreme case the vehicle can even turn on the spot - a so-called "zero turn".

Additionally or alternatively, use of two CVTs to drive respective vehicle wheels may be advantageous in that it allows the differential gear of a conventional vehicle transmission to be dispensed with.

Even where steering is achieved in the conventional manner by control of the angles of steered front vehicle wheels, there are powerful incentives for controlling the distribution of torque between the driven vehicle wheels - to improve vehicle handling, skid control, stability on split-mu surfaces, etc.

EP0306272 A1 discloses a two-regime CVT for a tracked vehicle steered by differential movement of its tracks, comprising two ratio-varying units of the toroidal-race, rolling-traction type, which drive the vehicle without steer when their outputs are the same, but with steer when those outputs differ. Each such output is connected respectively by way of a steering epicyclic gear set to the drive of one of the tracks. According to one aspect of the invention the axes of the two variators and of the inputs from them to the two steering epicyclics are all coaxial, and may also be coaxial with the input to a third epicyclic gear set operable to change the transmission between its two regimes. Another aspect of the invention resides in a novel arrangement of the components of the two steering epicyclic gear sets in which in the first of the regimes the transmission input directly drives one input of each steering epicyclic, whereas in the second regime the transmission input is disconnected from them, but one of those inputs now becomes an output and drives the other input.

In accordance with the present invention as defined in claim 1, there is a transmission arrangement comprising:
a left hand transmission comprising:
a left hand variator which comprises a left hand input race drivable from a transmission input, a left hand output race, and a set of left hand variator rollers arranged to transmit drive between the left hand input race and the left hand output race, the left hand variator rollers being movable to permit continuous change in ratio of rotary speed of the left hand input race to rotary speed of the left hand output race, and
a left hand epicyclic unit having two left hand epicyclic inputs drivable respectively along with the left hand input race and the left hand output race, and a left hand epicyclic output which is arranged to drive a left hand transmission output;
and a right hand transmission comprising:
   a right hand variator which comprises a right hand input race drivable from the transmission input, a right hand output race, and a set of right hand variator rollers arranged to transmit drive between the right hand input race and the right hand output race, the right hand variator rollers being moveable to permit continuous change in ratio of rotary speed of the right hand input race to rotary speed of the right hand output race; and
   a right hand epicyclic unit having two right hand epicyclic inputs drivable respectively along with the right hand input race and the right hand output race, and a right hand epicyclic output which is arranged to drive a right hand transmission output; and
   the left hand variator rollers being movable independently of the right hand variator rollers so that the speeds of the left hand output race and the right hand output race are independently variable;
   wherein the right and left hand epicyclic units are between the right and left hand variators;
   the left hand transmission further comprises a left hand clutch arrangement by means of which the left hand transmission can be selectively configured in either of (a) a low regime in which the left hand epicyclic output is coupled to the left hand transmission output and (b) a high regime in which the left hand output race is coupled to the left hand transmission output;
   the right hand transmission further comprises a right hand clutch arrangement by means of which the right hand transmission can be selectively configured in either of (a) a low regime in which the right hand epicyclic output is coupled to the right hand transmission output and (b) a high regime in which the right hand output race is coupled to the right hand transmission output; and
   the left and right hand clutch arrangements are configured, when in the high regimes of the left and right hand transmissions, to couple the left and right hand output races such that they rotate together.

Also disclosed is a transmission arrangement comprising:
a left hand transmission comprising:
a left hand variator which comprises a left hand input race drivable from a transmission input, a left hand output race, and a set of left hand variator rollers arranged to transmit drive between the left hand input race and the left hand output race, the left hand variator rollers being movable to permit continuous change in ratio of rotary speed of the left hand input race to rotary speed of the left hand output race, and
a left hand epicyclic unit having two left hand epicyclicinputs drivable respectively along with the left hand input race and the left hand output race, and a left hand epicyclic output which is arranged to drive a left hand transmission output;
and a right hand transmission comprising:
   a right hand variator which comprises a right hand input race drivable from the transmission input, a right hand output race, and a set of right hand variator rollers arranged to transmit drive between the right hand input race and the right hand output race, the right hand variator rollers being moveable to permit continuous change in ratio of rotary speed of the right hand input race to rotary speed of the right hand output race, and
   a right hand epicyclic unit having two right hand epicyclic inputs drivable respectively along with the right hand input race and the right hand output race, and a right hand epicyclic output which is arranged to drive a right hand transmission output;
   the right hand epicyclic unit being a frictional device in which right hand planets roll upon facing annular surfaces of a pair of right hand epicyclic elements, preferably raceways, the planets being received in a right hand planet carrier;
   the left hand epicyclic unit being a frictional device in which left hand planets roll upon facing annular surfaces of a pair of left hand epicyclic elements, preferably raceways, the planets being received in a left hand planet carrier; and
   the left hand variator rollers being movable independently of the right hand variator rollers so that the speeds of the left hand output race and the right hand output race are independently variable.

The epicyclic element suitably comprises an epicyclic raceway where the epicyclic unit is a frictional or traction unit.

It is important to note that the terms "left hand" and "right hand" are used merely to denote that the components in question form part of the transmission leading to the left 5 hand transmission output, or of the transmission leading to the right hand transmission output, respectively. They do not necessarily reflect the physical arrangement of the components.

The use of frictional epicyclic units in the transmission arrangement proves particularly advantageous. Constructionally, the arrangement according to the present invention can be especially straightforward.

The variators are preferably of torque-controlled type.

The planets may be formed as balls.

The input and output races can be mounted for rotation about a common axis. Also the epicyclic units can be mounted coaxially with the input and output races. Preferably these components are mounted on a common variator shaft.

In embodiments where an end load actuator is provided to urge the input and output races into engagement with the rollers, this actuator can additionally serve to urge the epicyclic elements into engagement with the planets, providing the required traction. Also the force exerted by the end load actuator can be referred to the variator shaft and transmitted through the left and right hand epicyclic units. In this way the epicyclic units make it possible to dispense with a thrust bearing necessary in other similar arrangements (as to which see in particular WO 2008/087450 once more) to transmit the end load. The right and left hand epicyclic units can be placed between the right and left hand variators.

In a particularly preferred embodiment, epicyclic elements of the left and right hand epicyclic units are coupled to rotate together. They may in particular be formed on opposite sides of a single epicyclic input disc. Advantageously, the epicyclic input disc may be provided with a clutch by which it is coupled to the transmission input in a low transmission regime to drive the epicyclic and is permitted to freewheel in a high transmission regime to reduce energy dissipation in the epicyclic units.

A clutch arrangement may be provided for switching between high and low regimes. Preferably the clutch arrangement acts upon the epicyclic input disc. The clutch arrangement can be adapted to prevent rotation of the epicyclic input disc to engage high regime and to couple the epicyclic input disc to the transmission input to engage low regime.

Also disclosed is a transmission arrangement comprising:
a left hand transmission comprising:
a left hand variator which comprises a left hand input race drivable from a transmission input, a left hand output race, and a set of left hand variator rollers arranged to transmit the drive between the left hand input race and the left hand output race, the left hand variator rollers being movable to permit continuous change in ratio of rotary speed of the left hand input race to rotary speed of the left hand output race, and
a left hand epicyclic unit having two left hand epicyclic inputs drivable respectively along with the left hand input race and the left and output race, and a left hand epicyclic output which is arranged to drive a left hand transmission output;
and a right hand transmission comprising:
   a right hand variator which comprises a right hand input race drivable from the transmission input, a right hand output race, and a set of right hand variator rollers arranged to transmit drive between the right hand input race and the right hand output race, the right hand variator rollers being moveable to permit continuous change in ratio of rotary speed of the right hand input race to rotary speed of the right hand output race, and
   a right hand epicyclic unit having two right hand epicyclic inputs drivable respectively along with the right hand input race and the right hand output race, and a right hand epicyclic output which is arranged to drive a right hand transmission output;
   the left hand variator rollers being movable independently of the right hand variator rollers so that the speeds of the left hand output race and the right hand output race are independently variable and
   the left hand transmission further comprising a left hand clutch arrangement by means of which the left hand transmission can be selectively configured in either of (a) a low regime in which the left hand epicyclic output is coupled to the left hand transmission out and (b) a high regime which the left hand output race is coupled to the left hand transmission output; and
   the right hand transmission further comprising a right hand clutch arrangement by means of which the right hand transmission can be selectively configured in either of (a) a low regime in which the right hand epicyclic output is coupled to the right hand transmission output and (b) a high regime in which the right hand output race is coupled to the right hand transmission output.

The provision of high and low regimes extends the range of transmission ratios beyond the range of ratios provided by the variators on their own.

In a preferred embodiment, the left and right hand clutch arrangements are configured, when in high regime, to couple the left and right hand output races such that they rotate together. Hence in low regime, and at low speed, the transmissions provide independent control of the left and right transmission outputs. In high regime, where this independent control is typically less important, they can be coupled together to function as a single unit.

Preferably a clutch for engaging high regime is shared by the left and right hand clutch arrangements. The arrangement may further comprise a differential gear through which drive is transmitted to the left and right hand transmission output shafts in the high regime.

In a preferred embodiment, the left and right hand clutch arrangements are operable independently of one another so that the left and right hand transmissions can be placed in different regimes. This may be advantageous in some applications, e.g. when the left and right hand transmissions are running at different speeds so that the transitions between regimes need to be made at different moments.

Preferably the left and right hand epicyclic units share an input which is provided with a clutch arrangement by which it is able to be selectively (a) coupled to the transmission input to engage one or high and low regime and (b) prevented from rotating to engage the other of high and low regime. This makes construction of a the clutch arrangement and associated parts particularly simple.

Also disclosed is a transmission arrangement comprising:
a left hand transmission comprising:
a left hand variator which comprises a left hand input race drivable from a transmission input, a left hand output race arranged to drive a left hand transmission output, and a set of left hand variator rollers arranged to transmit drive between the left hand input race and the left hand output race, the left hand variator rollers being movable to permit continuous change in ratio of rotary speed of the left hand input race to rotary speed of the left hand output race;
and a right hand transmission comprising a right hand variator which comprises a right hand input race drivable from the transmission input, a right hand output race arranged to drive a right hand transmission output, and a set of right hand variator rollers arranged to transmit drive between the right hand input race and the right hand output race, the right hand variator rollers being moveable to permit continuous change in ratio of rotary speed of the right hand input race to rotary speed of the right hand output race;
the left hand variator rollers being movable independently of the right hand variator rollers so that the speeds of the left hand output race and the right hand output race are independently variable; and
both of the variators being torque controlled, thereby providing for independent control of torque at the left and right hand transmission outputs.

This embodiment provides, in a straightforward manner, for "torque vectoring" - independent control of the torque supplied to wheels on opposite sides of the vehicle. Torque vectoring is particularly attractive e.g. for vehicle stability control.

Also disclosed is a transmission arrangement for a vehicle having an enginewhich drives left and right hand wheels, the arrangement comprising a left hand transmission comprising a left hand variator having an output and also having an input configured to be driven from the engine, a right hand transmission comprising a right hand variator having an output and also having an input configured to be driven from the engine, a differential gear, and a clutch arrangement for selectively engaging:
a first mode in which the left hand variator's output is coupled to and drives the left hand wheel, the right hand variator's output is coupled to and drives the right hand wheel, and speed ratios of the left and right hand variators are independently variable to enable the left and right hand wheels to be driven at different speeds, and
a second mode in which the left and right hand variators' outputs are coupled together to rotate at the same speed and are coupled through the differential gear to the left and right hand wheels.

The term "engine" should be understood to encompass any suitable form of rotary driver, including an electric motor.

Specific embodiments of the present invention will now be described, by way of example only, with reference to the accompanying drawings in which:
Figures 1a and 1b are highly simplified representations of a known toroidal-race rolling-traction variator in side view and in perspective, respectively;
Figure 2 is a block diagram of the major components of a transmission arrangement embodying the present invention;
Figure 3 is a simplified representation of a transmission arrangement embodying the present invention, in axial section;
Figure 4 is similar to Figure 3 but represents a variant of the transmission arrangement which also embodies the present invention; and
Figure 5 is similar to Figure 3 but represents a variant of the transmission arrangement which also embodies the present invention.

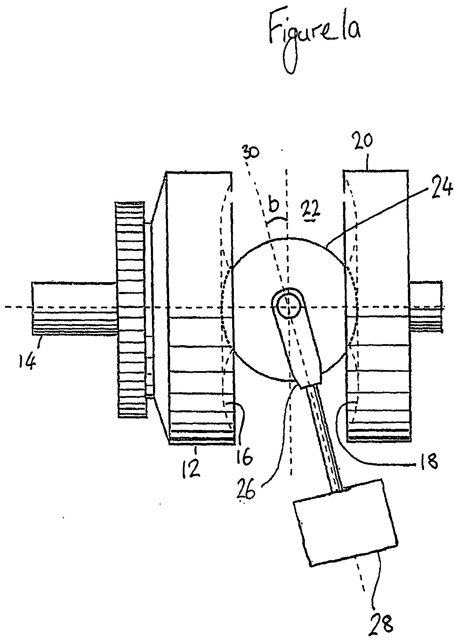

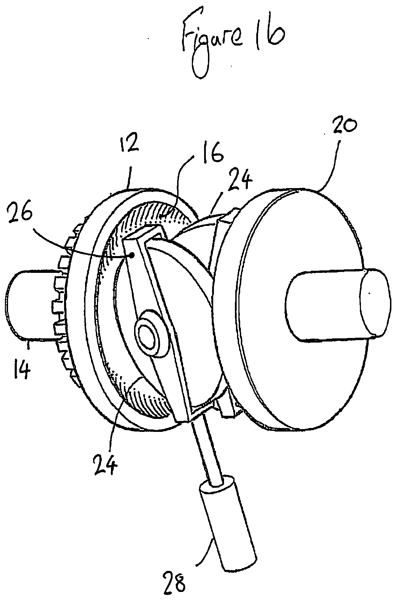

Figures 1a and 1b represent a toroidal-race rolling traction variator of known type. They do not represent embodiments of the invention but are intended to illustrate certain relevant principles and to assist the reader in understanding the operation of one type of variator that can be used in implementing the invention. The invention may however be implemented using other types of variator.

An input race 12 is mounted upon a variator shaft 14 and has a part-toroidal surface 16 facing toward a corresponding part-toroidal surface 18 formed upon an output race 20, a generally toroidal cavity 22 being thus defined between the races. The races are each rotatable about a common axis defined by the variator shaft 14 and their mountings permit one race to rotate relative to the other. The variator shaft 14 forms the variator input and the output race 20 forms its output. The toroidal cavity 22 contains a set of rollers 24 which run upon the races to transfer drive between them. Each roller 24 is rotably mounted in a respective carriage 26 which is itself coupled to an actuator 28 which applies a controlled reaction force to the roller/carriage assembly. Movement of the actuator 28 is accompanies by movement of the roller 24 along a circumferential path about the shaft 14. This circumferential movement of the roller 24 causes it also to undergo a tilting motion about a tilt axis 30 due to a steering effect exerted on the roller 24 by the races 12, 20. The steering effect causes the roller always to seek an orientation in which its own axis of rotation coincides with the axis defined by the variator shaft 14. Note that the axis 30 about which the roller tilts is inclined by a caster angle b to a plane radial to the variator shaft 14. By virtue of the castor angle, tilting of the roller

24 is able to restore the coincidence of the two axes. The result is that the roller's tilt angle is a function of its circumferential position. The rollers 24 move and tilt in unison. Tilting of the rollers changes the radii of the paths they trace upon the input race 12 and the output race 20, and so causes a change in the variator ratio.

The actuators 28 each apply a reaction force to their respective roller 24. The variator's reaction torque is proportional to the reaction force. Changes of speed at the variator input and output are automatically accommodated, the rollers moving and tilting to change the variator ratio as necessary. This is a torque-controlled variator. Embodiments of the present invention may use torque controlled variators or ratio controller variators.

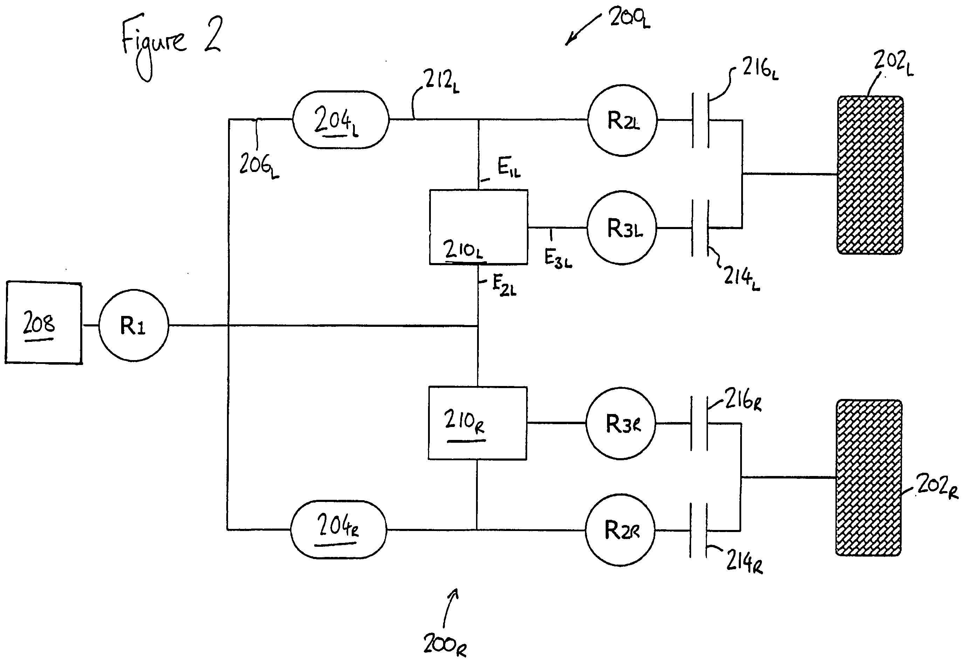

Figure 2 shows a transmission arrangement according to the present invention. The arrangement comprises two transmissions - a left hand transmission 200_{L} driving a left hand vehicle wheel 202_{L} and a right hand transmission 200_{R} driving a right hand vehicle 202_{R}. The term "transmission arrangement" is used herein to refer to the entire arrangement, including both the left and right hand transmissions. References to left hand and right hand components imply that the components referred to are part of the transmission driving the left or right hand vehicle wheel but do not necessarily reflect the physical arrangement of the components.

The left hand transmission 200L comprises a left hand variator 204_{L} whose input 206_{L} is driven from engine 208 via gearing R₁. A left hand epicyclic unit 210_{L} has three rotary parts E_{1L}, E_{2L}, E_{3L}. One of these - E_{1L} - is coupled to output 212_{L} of the left hand variator 204_{L}. Another - E_{2L} - is coupled on the gearing R₁. The third part E_{3L} is able to be coupled through gearing R_{3L} and a left hand low regime clutch 214_{L} to the left hand vehicle wheel 202_{L}. An alternative path for transmission of power to the vehicle wheel 202_{L} is provided by gearing R_{2L} which is driven by the variator output 212_{L} and which is able to be coupled to the left hand vehicle wheel 202_{L} by a left hand high regime clutch 216_{L}.

The right hand transmission is similarly formed to the left hand transmission, being driven by the engine 208 through gearing R₁ having right hand variator 204_{R}, epicyclic unit 210_{R}, gearing R_{2R} and R_{3R} and high/low regime clutches 214_{R}, 216_{R} for driving the right hand vehicle wheel 202_{R}.

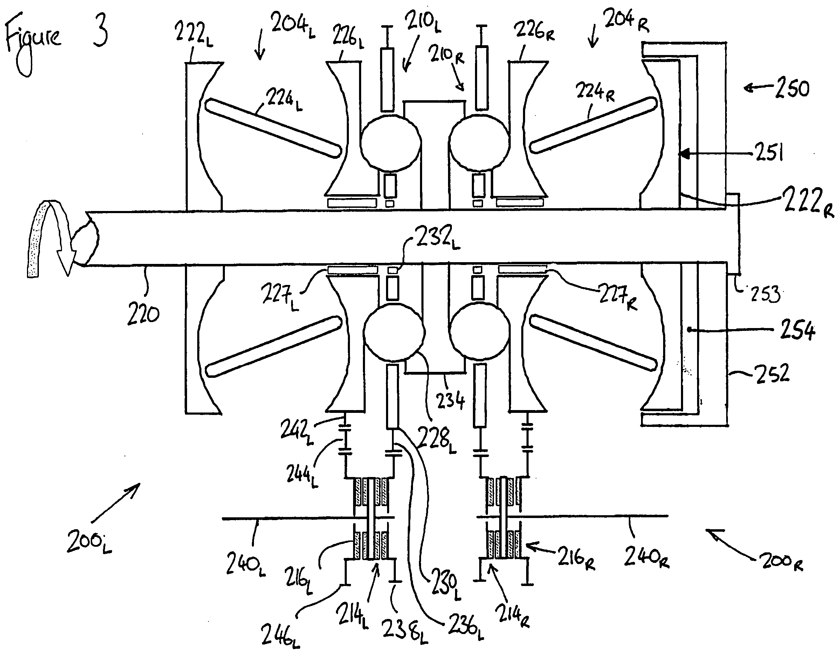

Figure 3 represents a practical implementation of the transmission configuration of Figure 2. The variators 204_{L}, 204_{R} are toroidal-race rolling-traction type devices which are coaxial with one another and are carried upon a common variator shaft 220, but it is important to appreciate that their variator ratios are nonetheless variable independently of one another. As in Figure 2, the left and right hand variators have a common input. This is formed in Figure 3 by a variator shaft 220 which is driven by the engine, although the engine and the gearing R₁ are omitted from Figure 3. Left and right hand input races 222_{L}, 222_{R} of the left and right hand variators are both mounted upon the variator shaft 220 and rotate along with it. Rollers 224_{L} of the left hand variator 204_{L} are able to move and tilt independently of rollers 224_{R} of the right hand variator 204_{R} and accordingly the speed of left hand output race 226_{L} of the left hand variator 204_{L} is variable independently of that of right hand output race 226_{R} of the right hand variator 204_{R}. Bearings 227_{L,R} serve to rotably mount the respective output races 226_{L,R} on the variator shaft 220.

As in Figure 2, the transmission arrangement has a left hand epicyclic 210_{L} and a right hand epicyclic 210_{R}. Epicyclics are often formed using toothed gears, and geared epicyclics may be used in other embodiments, but in the Figure 3 embodiment the epicyclics are of frictional type. The left hand epicyclic 210_{L} has a left hand set of planets 228_{L} formed as spherical balls each of which is disposed in a respective opening in a left hand planet carrier 230_{L} formed as a plate. The left hand planet carrier 230_{L} is able to rotate about the variator shaft 220 by virtue of a bearing 232_{L}, and as it does so the left hand planets 228_{L} move in a circular orbit about the variator shaft 220. The left hand planets 228_{L} run upon (a) a shaped rear face of the left hand output race 226_{L} and (b) a shaped face of an epicyclic input disc 234 which is mounted on the variator shaft 220 to rotate along with it. The outer periphery of the left hand planet carrier 230_{L} is toothed to form a left hand carrier gear wheel 236_{L} which meshes with a clutch gear wheel 238_{L} of left hand low regime clutch 214_{L} and is able to be coupled through that clutch to a left hand output shaft 240_{L} which drives the left hand vehicle wheel (not seen in Figure 3).

Comparing Figure 3 with Figure 2, the epicyclic's first part E_{1L} of Figure 2 is formed in Figure 3 by the rear face of the left hand output disc 236_{L}. The second part E_{2L} is formed by the epicyclic input disc 234. The third part E_{3L} is formed by the left hand planet carrier 230_{L}. Gearing R_{3L} in Figure 2 is formed by the carrier gear wheel 236_{L} and the clutch gear wheel 238_{L} in Figure 3.

From a study of Figure 3 it will be apparent that the direction and speed of rotation of the left hand planet carrier 230_{L} depends on the relative speeds of the left hand race 226_{L} and the epicyclic input disc 234. Note that these parts rotate in opposite directions. The direction of rotation of the left hand output race 226_{L} will be referred to, arbitrarily, as clockwise and the direction of the epicyclic input disc 234 anticlockwise. If the variator rollers 224_{L} are inclined, as in Figure 3, to give a speed increase from the variator's input to its output then the output race 226_{L} will turn faster than the epicyclic input disc 234. The planets 228_{L}, and the planet carrier 230_{L} will turn clockwise. If the variator rollers 224_{L} are oppositely inclined to give a speed reduction from the variator's input to its output then the output race 226_{L} will turn more slowly, the rotation of the epicyclic input disc 234 will dominate and the planet carrier 230_{L} will turn anticlockwise. Tilting movement of the rollers causes stepless change of the rotation speed of the output race 226_{L}, and hence the planet carrier 230_{L}. At one particular roller angle the speeds of the output race 226_{L} and of the epicyclic input disc 234 cancel each other out and the planet carrier 230_{L} is stationary. This is the "geared neutral" condition discussed above.

With the left hand low regime clutch 214_{L} engaged, the speed of the left hand transmission output shaft 240_{L} is a simple multiple of the speed of the left hand planet carrier 230_{L} and, merely by tilting of the left hand variator rollers 224_{L}, can be steplessly varied through a range of forward and reverse speeds.

The available range of forward speeds is extended by virtue of the left hand high regime clutch 216_{L} and associated gearing. A toothed outer periphery of the left hand output race 226_{L} forms a left hand variator output gear 242_{L} and meshes via a left hand pinion 244_{L} with a left hand high regime clutch gear 246_{L} which is able to be coupled, by engagement of the high regime clutch 216_{L}, to the left hand output shaft 240_{L}. This gear train is equivalent to the gearing R3L of Figure 2.

In operation, one or other of the clutches 214_{L}, 216_{L} will normally be engaged to provide either high or low regime. Moving from one regime to the other involves releasing one clutch and engaging the other, By virtue of the choice of gearing there is a certain variator ratio at which a change from one regime to the other produces no change in the speed of the left hand output shaft 240_{L}. This occurs when the transmission is at, or close to, the maximum forward sped in low regime and the minimum forward speed in high regime. Regime changes are timed to occur at this "synchronous" ratio and can consequently take place smoothly, without speed change of the transmission output. The above discussion refers only to the left hand transmission 200_{L}, but the right hand transmission 200_{R} is in almost all respects a mirror image of the left hand transmission. Its variator 204_{R}, epicyclic 210_{R} and clutches 214_{R}, 216_{R} drive the right hand transmission output 240_{R} in precisely the manner already described. Note that the right hand clutches 214_{R}, 216_{R} are controllable independently of the left hand clutches 214_{L}, 216_{L} since the left and right hand transmissions typically will not be required to change from one regime to the other at the same instant.

The one distinction shown in Figure 3 between the left and right hand transmissions is that the latter incorporates an end load device 250. To understand its function, consider first of all that the variators 204_{L}, 204_{R} and the epicyclics 210_{L}, 210_{R} can function only if their rolling components are biased into engagement with one another in order to provide traction. The variator races 222, 226 must be biased into engagement with the rollers 224. The epicyclic input disc 234 and the output races 226 must be biased into engagement with the planets 228. The required biasing force is referred to herein as the "end load" and is supplied by the end load device 250. The direction of the force is represented by an arrow 251 in Figure 3.

In the present embodiment the end load device 250 is hydraulic. A cylinder member 252 is mounted on the variator shaft 220 and prevented from moving along it by abutment with a flange 253 formed upon the shaft. The right hand input race 222_{R} has some freedom to move along the variator shaft 220 and is received in the cylinder member 252 in the manner of a piston, defining in it a working chamber 254 which is supplied with pressurised fluid. The fluid pressure, and hence the end load, are adjusted in sympathy with variator torque. For example if the rollers 224_{L}, 224_{R} are controlled by hydraulic actuators (such as actuators 28 in Figure 1) then the higher of the pressures applied to the two sets of actuators may also be applied to the end load device 250. In this way end load is varied in sympathy with variator reaction torque, which is desirable in order to avoid excessive slip in the variator whilst at the same time providing good variator efficiency and longevity.

The end load is directed through the variator rollers 224 and the variator races 222, 226, and through the epicyclics 210, to the left hand input race 222_{L} and through it to the variator shaft 220, which is thus placed in tension. The bearings 227, 232 of the output races 226 and of the planet carriers 230 give them some freedom to move along the shaft, enabling them to transmit the end load. The epicyclic input disc 234 likewise has some freedom of axial movement - it may for example be coupled to the variator shaft 220 through longitudinal splines (not shown) to enable it to move axially while ensuring that it rotates along with the variator shaft 220.

Note that other devices may be used to provide end load. For example GB 2438412 A (Torotrak (Development) Limited) describes a mechanical end load device that could be adopted in embodiments of the present invention.

A transmission arrangement of the illustrated type needs to incorporate some form of thrust bearing to transmit the end load while accommodating rotation of one output race 226 relative to the other. In the Figure 3 arrangement, it is the frictional epicyclics 210 that form this thrust bearing. This is not only constructionally simple but also potentially energy efficient - losses that would arise from use of separate epicyclics and thus bearings can be reduced by combining these functions in one unit.

The transmission seen in Figure 3 may in principle be ratio controlled, like the transmissions of prior art documents WO 2008/087450 and WO 2007/023140 referred to above, in which case they may be used to steer a vehicle. Alternatively they may be torque controlled, giving the facility for "torque vectoring" - control of the torques applied to left and right hand vehicle wheels. In the latter case, torque vectoring may assist vehicle steering and/or it may be used in management of vehicle stability.

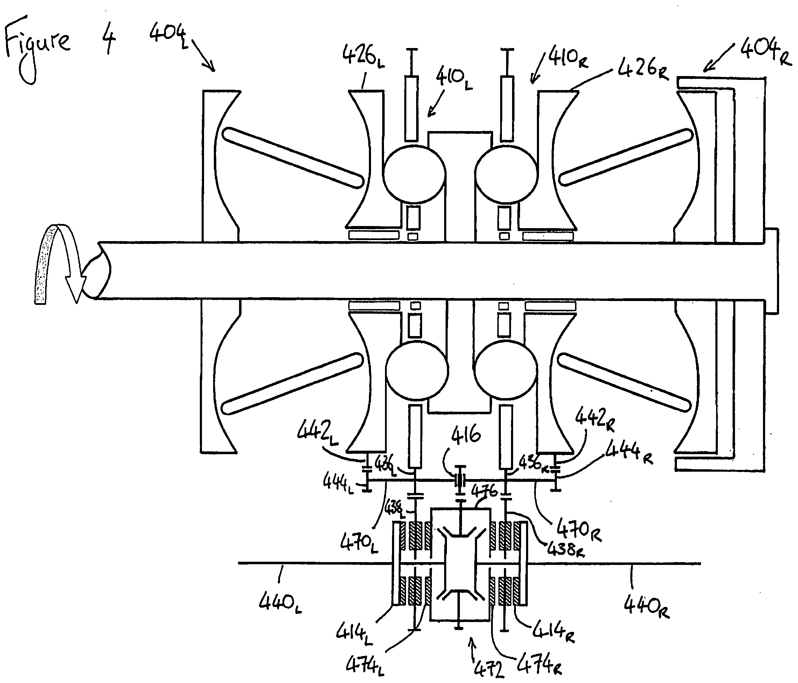

The embodiment of Figures 2 and 3 dispenses with the differential gear unit of a conventional motor vehicle transmission since that unit is not strictly necessary when the left and right hand vehicle wheels are driven through separate transmissions. However Figure 4 shows a variant of the transmission arrangement which incorporates a differential gear.

The arrangement of variators 404_{L,R} and epicyclics 410_{L,R} is precisely as depicted in Figure 3 and these features will not be described again. The arrangements differ with respect to the clutches and gearing used to transfer power to the left and right hand transmission output shafts 440_{L,R}. In Figure 4 there is a single high regime clutch 416. Left and right hand variator output gears 442_{L,R}, formed as before on the outer periphery of respective output races 426_{L,R}, drive left and right hand transfer shafts 470_{L,R} through left and right hand pinions 444_{L,R}. When engaged, the high regime clutch 416 locks together the left and right hand transfer shafts 470_{L,R}, so that the variators' output races 426_{L,R} must rotate at the same speed and the left and right hand variators 404_{L,R} function as a single unit. The high regime clutch 416 also couples the output races 426_{L,R} to an input of differential gear unit 472, which drives the left and right hand output shafts 440_{L,R}. Hence in high regime independent control over torque or speed of the two output shafts 440_{L,R} is not available.

In low regime the illustrated transmission arrangement provides two modes of operation. In the first of these, low regime clutches 414_{L,R} are engaged and the other clutches are disengaged. The output shafts 440_{L,R} are respectively driven through left and right hand carrier gear wheels 436_{L,R} and left and right hand clutch gear wheels 438_{L,R}. This mode provides low regime operation just as described above with reference to Figure 3 and gives the facility for independent control of speed or torque at the left and right hand transmission output shafts 440_{L,R}.

The second low regime mode is activated by engaging left and right hand locking clutches 474_{L,R} which serve respectively to lock the left and right hand clutch gear wheels 438_{L,R} to the input cage 476 of the differential gear unit 472. In this mode, as in high regime, the variators' output races 426_{L,R} are constrained to rotate at the same speed so the left and right hand variators 404_{L,R} function as one unit, their combined output being coupled to the transmission output shafts through the differential gear unit 472.

Hence the transmission of Figure 4 can be switched between
(a) operating in a first mode which is akin to a conventional transmission in that a combined output from the two variators drives the differential gear unit which in turn drives the transmission's left and right output shafts. This mode is available in both low and high regimes, and
(b) a low regime (low speed) mode of operation in which the left and right output shafts are independently controllable.

A transition from low regime to high regime can only be made whilst in the first of these modes. Changing from the second mode to the first will typically be carried out with the vehicle stationary.

The vehicle can behave like a conventional vehicle much of the time, but has the facility for improved transmission control for particular situations, e.g. parking in confined spaces, off-road operation, etc.

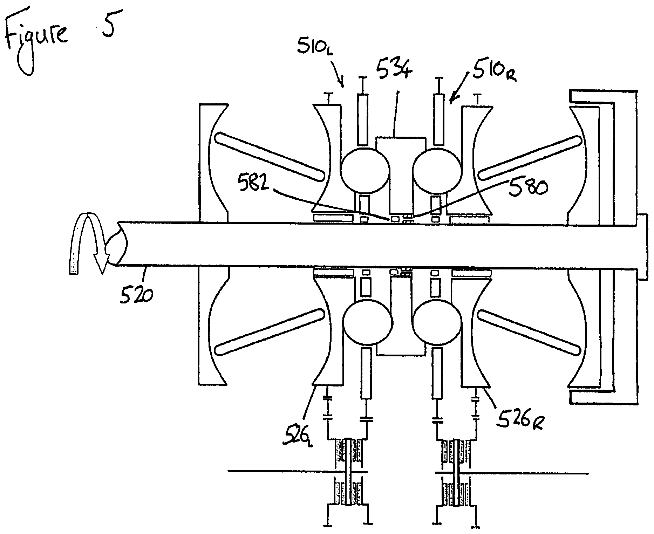

Figure 5 illustrates a transmission arrangement which is very similar to the one seen in Figure 3 and like components will not be described again. The sole distinction between the two arrangements concerns the mounting of epicyclic input disc 534 on variator shaft 520. The Figure 5 arrangement provides improved efficiency in high regime. It will be apparent that in high regime the epicyclics 510_{L,R} do not particulate in transmission of torque to the vehicle wheels. However because the epicyclic input disc 534 rotates in the opposite direction to the variators' output races 526_{L,R}, the speed difference across the epicyclics 510_{L,R} is large and can result in significant parasitic losses. To reduce these, in the Figure 5 arrangement the epicyclic input disc 534 is permitted to rotate about the variator shaft 520 in high regime. This is achieved in the illustrated example by mounting the epicyclic input disc 534 on the variator shaft 520 through a bearing 582.

A clutch 580 serves to lock the two together in low regime. When both transmissions are in high regime and the epicyclics 510_{L,R} freewheel, the clutch 580 is released to allow the epicyclic input disc 534 to spin along with the output races 526_{L,R}.

As in all of the depicted embodiments, the transition between regimes can be made at synchronous ratio.

## Claims

1. A transmission arrangement comprising:
a left hand transmission (200L) comprising:
a left hand variator (204L) which comprises a left hand input race (222L) drivable from a transmission input, a left hand output race (226L), and a set of left hand variator rollers (224L) arranged to transmit drive between the left hand input race (222L) and the left hand output race (226L), the left hand variator rollers (224L) being movable to permit continuous change in ratio of rotary speed of the left hand input race (222L) to rotary speed of the left hand output race (226L), and
a left hand epicyclic unit (210L) having two left hand epicyclic inputs drivable respectively along with the left hand input race (222L) and the left hand output race (226L), and a left hand epicyclic output which is arranged to drive a left hand transmission output;
and a right hand transmission comprising:
a right hand variator (204R) which comprises a right hand input race (222R) drivable from the transmission input, a right hand output race (226R), and a set of right hand variator rollers (224R) arranged to transmit drive between the right hand input race (222R) and the right hand output race (226R), the right hand variator rollers (224R) being movable to permit continuous change in ratio of rotary speed of the right hand input race (222R) to rotary speed of the right hand output race (226R), and
a right hand epicyclic unit (210R) having two right hand epicyclic inputs drivable respectively along with the right hand input race (222R) and the right hand output race (226R), and a right hand epicyclic output which is arranged to drive a right hand transmission output;
the left hand variator rollers (224L) being movable independently of the right hand variator rollers (224R) so that the speeds of the left hand output race (212L) and the right hand output race (212R) are independently variable;
wherein the right and left hand epicyclic units are between the right and left hand variators (204R, 204L);
the left hand transmission (200L) further comprises a left hand clutch arrangement by means of which the left hand transmission (200L) can be selectively configured in either of (a) a low regime in which the left hand epicyclic output is coupled to the left hand transmission output and (b) a high regime in which the left hand output race is coupled to the left hand transmission output;
the right hand transmission (200R) further comprises a right hand clutch arrangement by means of which the right hand transmission (200R) can be selectively configured in either of (a) a low regime in which the right hand epicyclic output is coupled to the right hand transmission output and (b) a high regime in which the right hand output race is coupled to the right hand transmission output; and
the left and right hand clutch arrangements are configured, when in the high regimes of the left and right hand transmissions (200L, 200R), to couple the left and right hand output races (226L, 226R) such that they rotate together.

2. A transmission arrangement as claimed in claim 1 in which the input and output races (222L, 222R, 226L, 226R) are mounted for rotation on a variator shaft (220) about a common axis.

3. A transmission arrangement as claimed in claim 2 in which the left and right hand epicyclic units (210L, 210R) are mounted upon the variator shaft (220).

4. A transmission arrangement as claimed in any one of the preceding claims in which one of the epicyclic elements of the left hand epicyclic unit (210L) and one of the epicyclic elements of the right hand epicyclic unit (210R) are coupled to rotate together.

5. A transmission arrangement as claimed in claim 4 in which the said one epicyclic element of the left hand epicyclic unit (210L) and the said one epicyclic element of the right hand epicyclic unit (210R) are formed on opposite sides of a single epicyclic input disc (234).

6. A transmission arrangement as claimed in claim 5 in which the left and right hand clutch arrangements couple the epicyclic input disc (234) to the transmission input in the low regimes to drive the left and right hand epicyclic units (210L, 210R) and in which the epicyclic input disc (234) is permitted to freewheel in the high transmission regimes.

7. A transmission arrangement as claimed in any one of the preceding claims wherein faces of the left and right hand output races (212L, 212R) are shaped to respectively form left and right hand epicyclic elements.

8. A transmission arrangement as claimed in claim 1 which further comprises a differential gear (472) through which drive is transmitted to the left and right hand transmission outputs in the high regimes.

9. A transmission arrangement as claimed in claim 8 for a vehicle having an engine which drives left and right hand wheels, wherein the left and right hand clutch arrangements are provided for selectively engaging:
a first mode in which the left hand output race (212L) is coupled to and drives the left hand wheel, the right hand output race (212R) is coupled to and drives the right hand wheel, and speed ratios of the left and right hand variators (204L, 204R) are independently variable to enable the left and right hand wheels to be driven at different speeds, and
a second mode in which the left and right hand output races (212L, 212R) are coupled together to rotate at the same speed and are coupled through the differential gear (472) to the left and right hand wheels.

10. A transmission arrangement as claimed in claim 1, in which the left and right hand clutch arrangements comprise left and right hand low regime clutches (214L, 214R) operable respectively to couple/decouple the left and right hand variators (204L, 204R) to the left and right hand epicyclic outputs.

11. A transmission arrangement as claimed in claim 10 in which at least one clutch of the left and right hand clutch arrangements is operable to couple the left and right hand epicyclic units to each other and to the differential gear (234).

12. A transmission arrangement as claimed in claim 11 in which at least one clutch of the left and right hand clutch arrangements is operable to couple the right and left hand output races (226L, 226R) to each other and to the differential gear (234).

## Patentansprüche

1. Getriebeanordnung, umfassend:
ein linkes Getriebe (200L), umfassend:
einen linken Variator (204L), der einen linken Eingangsring (222L), der von einem Getriebeeingang antreibbar ist, einen linken Ausgangsring (226L) und einen Satz aus linken Variatorrollen (224L) umfasst, die angeordnet sind, um Antrieb zwischen dem linken Eingangsring (222L) und dem linken Ausgangsring (226L) zu übertragen, wobei die linken Variatorrollen (224L) bewegbar sind, um durchgehende Änderung des Verhältnisses von Drehgeschwindigkeit des linken Eingangsrings (222L) zu Drehgeschwindigkeit des linken Ausgangsrings (226L) zu ermöglichen, und
eine linke epizyklische Einheit (210L) mit zwei linken epizyklischen Eingängen, die jeweils zusammen mit dem linken Eingangsring (222L) und dem linken Ausgangsring (226L) antreibbar sind, und einem linken epizyklischen Ausgang, der angeordnet ist, um einen linken Getriebeausgang anzutreiben;
und ein rechtes Getriebe, umfassend:
einen rechten Variator (204R), der einen rechten Eingangsring (222R), der von dem Getriebeeingang antreibbar ist, einen rechten Ausgangsring (226R) und einen Satz aus rechten Variatorrollen (224R) umfasst, die angeordnet sind, um Antrieb zwischen dem rechten Eingangsring (222R) und dem rechten Ausgangsring (226R) zu übertragen, wobei die rechten Variatorrollen (224R) bewegbar sind, um durchgehende Änderung des Verhältnisses von Drehgeschwindigkeit des rechten Eingangsrings (222R) zu Drehgeschwindigkeit des rechten Ausgangsrings (226R) zu ermöglichen, und
eine rechte epizyklische Einheit (210R) mit zwei rechten epizyklischen Eingängen, die jeweils zusammen mit dem rechten Eingangsring (222R) und dem rechten Ausgangslauf (226R) antreibbar sind, und einem rechten epizyklischen Ausgang, der angeordnet ist, um einen rechten Getriebeausgang anzutreiben;
wobei die linken Variatorrollen (224L) unabhängig von den rechten Variatorrollen (224R) bewegbar sind, sodass die Geschwindigkeiten des linken Ausgangsrings (212L) und des rechten Ausgangsrings (212R) unabhängig variabel sind;
wobei sich die rechte und die linke epizyklische Einheit zwischen dem rechten und dem linken Variator (204R, 204L) befinden;
wobei das linke Getriebe (200L) ferner eine linke Kupplungsanordnung umfasst, mit deren Hilfe das linke Getriebe (200L) selektiv in einem von (a) einem niedrigen Bereich, in dem der linke epizyklische Ausgang an den linken Getriebeausgang gekoppelt ist, und (b) einem hohen Bereich, in dem der linke Ausgangsring an den linken Getriebeausgang gekoppelt ist, konfiguriert werden kann;
wobei das rechte Getriebe (200R) ferner eine rechte Kupplungsanordnung umfasst, mit deren Hilfe das rechte Getriebe (200R) selektiv in einem von (a) einem niedrigen Bereich, in dem der rechte epizyklische Ausgang an den rechten Getriebeausgang gekoppelt ist, und (b) einem hohen Bereich, in dem der rechte Ausgangsring an den rechten Getriebeausgang gekoppelt ist, konfiguriert werden kann; und
wobei die linke und die rechte Kupplungsanordnung konfiguriert sind, wenn sie sich in den hohen Bereichen des linken und des rechten Getriebes (200L, 200R) befinden, um den linken und den rechten Ausgangsring (226L, 226R) zu koppeln, sodass sie sich zusammen drehen können.

2. Getriebeanordnung nach Anspruch 1, wobei der Eingangs- und der Ausgangsring (222L, 222R, 226L, 226R) zur Drehung auf einer Variatorwelle (220) um eine gemeinsame Achse montiert sind.

3. Getriebeanordnung nach Anspruch 2, wobei die linke und die rechte epizyklische Einheit (210L, 210R) auf der Variatorwelle (220) montiert sind.

4. Getriebeanordnung nach einem der vorhergehenden Ansprüche, wobei eines der epizyklischen Elemente der linken epizyklischen Einheit (210L) und eines der epizyklischen Elemente der rechten epizyklischen Einheit (210R) gekoppelt sind, um sich zusammen zu drehen.

5. Getriebeanordnung nach Anspruch 4, wobei das eine epizyklische Element der linken epizyklischen Einheit (210L) und das eine epizyklische Element der rechten epizyklischen Einheit (210R) auf gegenüberliegenden Seiten einer einzelnen epizyklischen Eingangsscheibe (234) gebildet sind.

6. Getriebeanordnung nach Anspruch 5, wobei die linke und die rechte Kupplungsanordnung die epizyklische Eingangsscheibe (234) an den Getriebeeingang in den niedrigen Bereichen koppeln, um die linke und die rechte epizyklische Einheit (210L, 210R) anzutreiben, und wobei sich die epizyklische Eingangsscheibe (234) in den hohen Getriebebereichen frei drehen darf.

7. Getriebeanordnung nach einem der vorhergehenden Ansprüche, wobei Oberflächen des linken und des rechten Ausgangsrings (212L, 212R) so geformt sind, dass sie jeweils ein linkes und ein rechtes epizyklisches Element bilden.

8. Getriebeanordnung nach Anspruch 1, die ferner ein Differentialgetriebe (472) umfasst, durch das Antrieb in den hohen Bereichen zu dem linken und dem rechten Getriebeausgang übertragen wird.

9. Getriebeanordnung nach Anspruch 8 für ein Fahrzeug mit einem Motor, der ein linkes und ein rechtes Rad antreibt, wobei die linke und die rechte Kupplungsanordnung bereitgestellt sind, um selektiv in Folgendes einzugreifen:
einen ersten Modus, in dem der linke Ausgangsring (212L) an das linke Rad gekoppelt ist und dieses antreibt, der rechte Ausgangsring (212R) an das rechte Rad gekoppelt ist und dieses antreibt und Geschwindigkeitsverhältnisse des linken und des rechten Variators (204L, 204R) unabhängig variabel sind, um dem linken und dem rechten Rad zu ermöglichen, mit unterschiedlichen Geschwindigkeiten angetrieben zu werden, und
einen zweiten Modus, in dem der linke und der rechte Ausgangsring (212L, 212R) aneinander gekoppelt sind, um sich mit der gleichen Geschwindigkeit zu drehen und durch das Differentialgetriebe (472) an das linke und das rechte Rad gekoppelt sind.

10. Getriebeanordnung nach Anspruch 1, wobei die linke und die rechte Kupplungsanordnung eine linke und eine rechte Kupplung mit niedrigen Bereichen (214L, 214R) umfassen, die jeweils bedienbar sind, um den linken und den rechten Variator (204L, 204R) an den linken und den rechten epizyklischen Ausgang zu koppeln/davon zu entkoppeln.

11. Getriebeanordnung nach Anspruch 10, wobei zumindest eine Kupplung der linken und der rechten Kupplungsanordnung bedienbar ist, um die linke und die rechte epizyklische Einheit aneinander und an das Differentialgetriebe (234) zu koppeln.

12. Getriebeanordnung nach Anspruch 11, wobei zumindest eine Kupplung der linken und der rechten Kupplungsanordnung bedienbar ist, um den rechten und den linken Ausgangsring (226L, 226R) aneinander und an das Differentialgetriebe (234) zu koppeln.

## Revendications

1. Agencement de transmission comprenant :
une transmission gauche (200L) comprenant :
un variateur gauche (204L) qui comprend un chemin d'entrée gauche (222L) pouvant être entraîné à partir d'une entrée de transmission, un chemin de sortie gauche (226L) et un ensemble de rouleaux (224L) de variateur gauche agencés pour transmettre l'entraînement entre le chemin d'entrée gauche (222L) et le chemin de sortie gauche (226L), les rouleaux de variateur gauche (224L) étant mobiles pour permettre un changement continu du rapport de la vitesse de rotation du chemin d'entrée gauche (222L) vers la vitesse de rotation du chemin de sortie gauche (226L), et
une unité épicycloïdale gauche (210L) possédant deux entrées épicycloïdales gauches pouvant être entraînées respectivement avec le chemin d'entrée gauche (222L) et le chemin de sortie gauche (226L), et une sortie épicycloïdale gauche qui est agencée pour entraîner une sortie de transmission gauche ;
et une transmission droite comprenant :
un variateur droit (204R) qui comprend un chemin d'entrée droit (222R) pouvant être entraîné à partir de l'entrée de transmission, un chemin de sortie droit (226R) et un ensemble de rouleaux (224R) de variateur droit agencés pour transmettre l'entraînement entre le chemin d'entrée droit (222R) et le chemin de sortie de droit (226R), les rouleaux (224R) de variateur droit étant mobiles pour permettre un changement continu du rapport de la vitesse de rotation du chemin d'entrée droit (222R) vers la vitesse de rotation du chemin de sortie droit (226R), et
une unité épicycloïdale droite (210R) possédant deux entrées épicycloïdales droites pouvant être entraînées respectivement le long du chemin d'entrée droit (222R) et du chemin de sortie droit (226R), et une sortie épicycloïdale droite qui est agencée pour entraîner une sortie de transmission droite ;
les rouleaux (224L) de variateur gauche étant mobiles indépendamment des rouleaux (224R) de variateur droit afin que les vitesses du chemin de sortie gauche (212L) et du chemin de sortie droit (212R) soient indépendamment variables ;
lesdites unités épicycloïdales droite et gauche étant entre les variateurs droit et gauche (204R, 204L) ;
la transmission gauche (200L) comprend en outre un agencement d'embrayage gauche au moyen duquel la transmission gauche (200L) peut être conçue sélectivement dans l'un ou l'autre (a) d'un bas régime dans lequel la sortie épicycloïdale gauche est couplée à la sortie de transmission gauche et (b) d'un haut régime dans lequel le chemin de sortie gauche est couplé à la sortie de transmission gauche ;
la transmission droite (200R) comprend en outre un agencement d'embrayage droit au moyen duquel la transmission droite (200R) peut être conçue sélectivement dans l'un ou l'autre (a) d'un bas régime dans lequel la sortie épicycloïdale droite est couplée à la sortie de transmission droite et (b) d'un haut régime dans lequel le chemin de sortie droit est couplé à la sortie de transmission droite ; et
les agencements d'embrayage gauche et droit sont conçus, lorsqu'ils sont dans les hauts régimes des transmissions gauche et droite (200L, 200R), pour coupler les chemins de sortie gauche et droit (226L, 226R) de sorte qu'ils tournent ensemble.

2. Agencement de transmission selon la revendication 1, dans lequel les chemins d'entrée et de sortie (222L, 222R, 226L, 226R) sont montés en vue d'une rotation sur un arbre de variateur (220) autour d'un axe commun.

3. Agencement de transmission selon la revendication 2, dans lequel les unités épicycloïdales gauche et droite (210L, 210R) sont montées sur l'arbre de variateur (220).

4. Agencement de transmission selon l'une quelconque des revendications précédentes, dans lequel l'un des éléments épicycloïdaux de l'unité épicycloïdale gauche (210L) et l'un des éléments épicycloïdaux de l'unité épicycloïdale droite (210R) sont couplés pour tourner ensemble.

5. Agencement de transmission selon la revendication 4, dans lequel ledit élément épicycloïdal de l'unité épicycloïdale gauche (210L) et ledit élément épicycloïdal de l'unité épicycloïdale droite (210R) sont formés sur les côtés opposés d'un seul disque d'entrée épicycloïdal (234).

6. Agencement de transmission selon la revendication 5, dans lequel lesdits agencements d'embrayage gauche et droit couplent le disque d'entrée épicycloïdal (234) à l'entrée de transmission dans les bas régimes pour entraîner les unités épicycloïdales gauche et droite (210L, 210R) et dans lequel le disque d'entrée épicycloïdal (234) est autorisé à tourner en roue libre dans les hauts régimes de transmission.

7. Agencement de transmission selon l'une quelconque des revendications précédentes, dans lequel les faces des chemins de sortie gauche et droit (212L, 212R) sont façonnés pour former respectivement des éléments épicycloïdaux gauche et droit.

8. Agencement de transmission selon la revendication 1, qui
comprend en outre un engrenage différentiel (472) à travers lequel l'entraînement est transmis aux sorties de transmission gauche et droite dans les hauts régimes.

9. Agencement de transmission selon la revendication 8 pour un véhicule comportant un moteur qui entraîne les roues gauche et droite, lesdits agencements d'embrayage gauche et droit étant prévus pour engager sélectivement :
un premier mode dans lequel le chemin de sortie gauche (212L) est couplé à la roue gauche et entraîne celle-ci, le chemin de sortie droit (212R) est couplé à la roue droite et entraîne celle-ci, et les rapports de vitesse des variateurs gauche et droit (204L, 204R) sont indépendamment variables pour permettre aux roues gauche et droite d'être entraînées à des vitesses différentes, et
un second mode dans lequel les chemins de sortie gauche et droit (212L, 212R) sont couplés ensemble pour tourner à la même vitesse et sont couplés par l'intermédiaire de l'engrenage différentiel (472) aux roues gauche et droite.

10. Agencement de transmission selon la revendication 1, dans lequel
les agencements d'embrayage gauche et droit comprennent des embrayages à bas régime gauche et droit (214L, 214R) servant respectivement à coupler/découpler les variateurs gauche et droit (204L, 204R) aux sorties épicycloïdales gauche et droite.

11. Agencement de transmission selon la revendication 10, dans lequel au moins un embrayage des agencements d'embrayage gauche et droit sert à coupler les unités épicycloïdales gauche et droite l'une à l'autre et à l'engrenage différentiel (234).

12. Agencement de transmission selon la revendication 11, dans lequel au moins un embrayage des agencements d'embrayage gauche et droit sert à coupler les chemins de sortie droit et gauche (226L, 226R) l'un à l'autre et à l'engrenage différentiel (234).
